# EUROPEAN PATENT SPECIFICATION

(11) **EP 0 928 411 B1**
(45) Date of publication and mention of the grant of the patent: **10.08.2005**
(21) Application number: 97945203.4
(22) Date of filing: 18.09.1997
(51) Int. Cl.: G01C 23/00

(54) **AIRCRAFT UTILITY SYSTEMS CONTROL AND INTEGRATION**
INTEGRATION UND STEUERUNG VON FLUGZEUGDIENSTLEISTUNGSSYSTEMEN
INTEGRATION ET COMMANDE DES CIRCUITS DE SERVITUDE D'UN AERONEF

(30) Priority: 27.09.1996 US 721818
(43) Date of publication of application: 14.07.1999
(73) Proprietor: HONEYWELL INC., Minneapolis Minnesota 55408 (US)
(72) Inventor: ENDRUD, Douglas, G., Peoria, AZ 85382 (US)
(74) Representative: Sturm, Christoph, Dipl.-Ing.
(86) International application number: PCT/US1997/016127
(87) International publication number: WO 1998/013667

(56) References cited:
- US-A- 4 845 495
- MORGAN J ET AL: "MD-11 ELECTRONIC INSTRUMENT SYSTEM" PROCEEDINGS OF THE DIGITAL AVIONICS SYSTEMS CONFERENCE, SEATTLE, OCT. 5 - 8, 1992, no. CONF. 11, 5 October 1992, INSTITUTE OF ELECTRICAL AND ELECTRONICS ENGINEERS, pages 248-253, XP000366695
- SMITH R S ET AL: "THE ARMY SPECIAL OPERATIONS AIRCRAFT INTEGRATED AVIONICS SUBSYSTEM - AN OPERATIONAL PERSPECTIVE" PROCEEDINGS OF THE DIGITAL AVIONICS SYSTEMS CONFERENCE, LOS ANGELES, OCT. 14 - 17, 1991, no. CONF. 10, 14 October 1991, INSTITUTE OF ELECTRICAL AND ELECTRONICS ENGINEERS, pages 533-538, XP000309297
- MOIR & CAPENER: "UTILITIES SYSTEMS MANAGEMENT - FLYING DEMONSTRATOR" AEROSPACE AVIONICS EQUIPMENT AND INTEGRATION CONFERENCE PROCEEDINGS - PROC SOC AUTOM ENG, 1986, WARRENDALE PA USA, pages 77-87, XP002052784

## Description

### 1. Field of the Invention

The present invention relates to aircraft control and more particularly to the integration of aircraft utility systems with avionics systems to provide integrated control, display and monitoring of aircraft functions to produce a more simple and less redundant system so as to reduce the number of both cockpit controllers and line replaceable units (LRUs) and obtain a reduction in weight, space and overall cost.

### 2. Description of the Prior Art

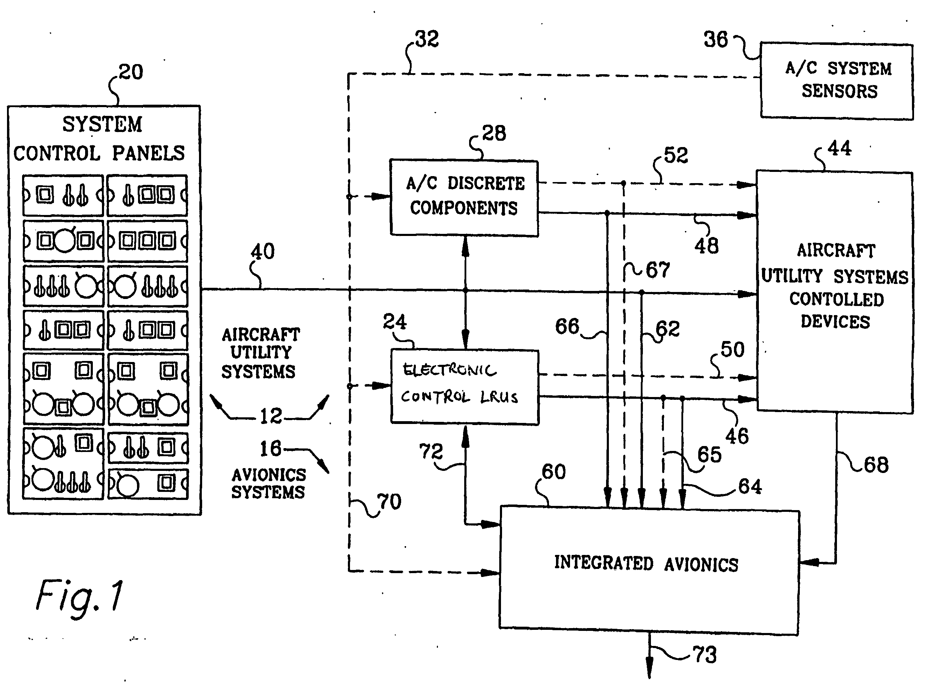

Prior art systems have handled the avionics (control of the aircraft flight such as autopilot, flight management systems, displays, radar etc.) and the aircraft utility systems (air-conditioning, oxygen control, communications, fire protection, fuel, engine controls, lights etc.) with separate independent controls. The only attempted integration of both functions has been in the presenting of some utility outputs to the avionics for purposes of monitoring and display. Figure 1 shows a typical prior art arrangement wherein the aircraft utility systems portion of the aircraft controls is shown generally in the upper portion of the Figure by an arrow 12 and the avionics systems are shown generally in the lower portion of the Figure by an arrow 16. Many of the functions of the utility systems are manually controlled by the pilot as, for example, by a plurality of switches, knobs and push buttons found generally around the cockpit and often in the overhead panel. These various controls are shown in Figure 1 in a box 20 entitled "System Control Panels". The individual switches knobs and pushbuttons are for use in setting of the various utility systems. Another group of controls are non-manual or automatic utility systems which may be individual systems in replaceable boxes or line replaceable units used for specific controls and are shown in Figure 1 as a box 24 entitled "Electronic Control LRUs". Still other non-manual devices such as relays, diodes and timers etc. are included in the utility systems and these are shown in Figure I as a box 28 entitled "A/C Discrete Components". The LRUs 24 and the discrete components 28 are shown receiving inputs from various aircraft sensors such as temperature, pressure etc., over interfaces shown as dashed line 32 from a box 36 entitled "A/C System Sensors". The LRUs 24 and the discrete components 28 also receive inputs from the control panels 20 over interfaces shown as a solid line 40. (For convenience, manual control paths are shown with solid lines and automatic system control paths are shown with dashed lines).

The aircraft utility systems controlled devices such as valves, motors, lights, fan and actuators, which are to be controlled are shown as box 44 entitled "Aircraft Utility Systems Controlled Devices" which is shown to receive control signals from the control pariels over the interfaces 40. The controlled devices 44 may also receive manual type control signals from the LRU's over interfaces shown as solid line 46 and from the components 28 over interfaces shown as solid line 48. LRUs 24 and components 28 also supply automatic type control signals to the controlled devices 44 over interfaces shown as dashed lines 50 and 52 respectively.

The avionics systems 16 are typically integrated as shown by a box 60 entitled "Integrated Avionics". The avionics box 60 contains a computer and receives status of coritrol commands from the control panels 20, over a solid line shown as arrow 62, from the LRU's 24 over a solid line 64 and a dashed line 65, and from the components 28 over a solid line 66 and a dashed line 67. The avionics 60 also receives status inputs from the controlled devices 44 over a line 68 and A/C system sensor data over dashed line 70. Finally, the avionics 60 both receives and sends signals to and from the LRUs 24 over a line shown as double ended arrow 72. An output 73 from avionics box 60 is shown for purposes of supplying signals to the various avionics aircraft controls (not shown)

It is seen that the individual processing and extensive interfacing of the prior art system of Figure 1 is complex, expensive, involves excess weight and space and that much of it is duplicated and redundant.

US Patent Specification No 4845495 discloses an integrated avionics control and display arrangement in which the signals are transmitted to the display.

### BRIEF DESCRIPTION OF THE INVENTION

The present invention provides an integrated aircraft control system as defined in Claim 1.

The system may include the features of any one or more of dependent Claims 2 to 5.

The present invention integrates most of the aircraft utility systems 12 into a single integrated system using much of the already existing equipment found in the avionics 60 of Figure 1. This operates to considerably simplify the system and to reduce duplication which saves weight, space and cost.

### BRIEF DESCRIPTION OF THE DRAWINGS

Figure I is a system diagram of the prior art; and

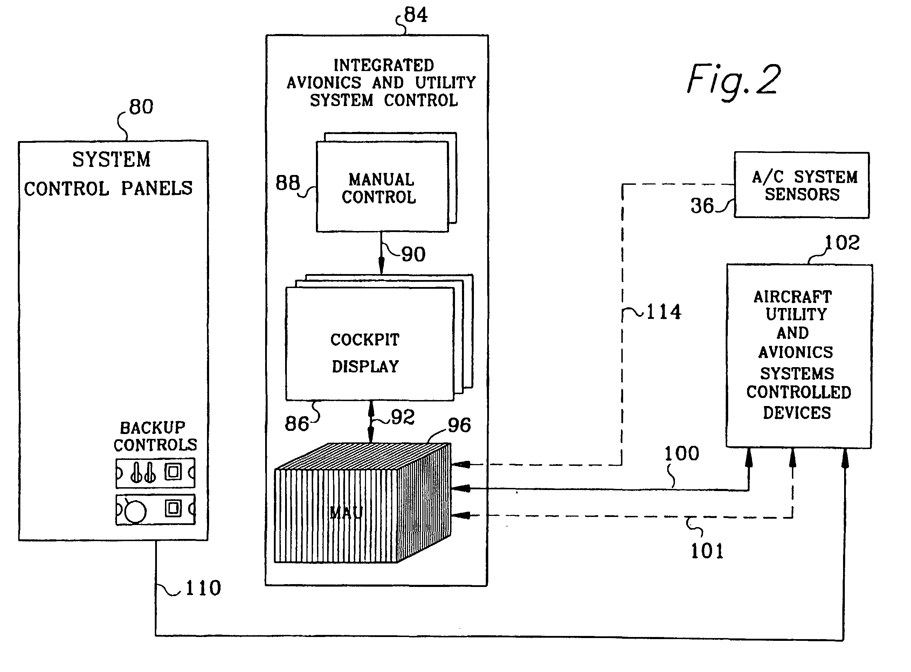

Figure 2 is a system diagram of the present invention

### DETAILED DESCRIPTION OF THE PREFERRED EMBODIMENTS

The preferred embodiment of the present invention is shown in block diagram in Figure 2. Figure 2 will perform all of the functions performed by the apparatus of Figure 1 but in a much simpler and compact arrangement. It will be noted that most of the control panels that appeared in box 20 of Figure I have been eliminated as seen in box 80 of Figure 2. There remains a necessary group of controls referred to as "Backup Controls" and it may be that other controls will, in some cases have to remain among the control panels in box 80 but for the most part all of the switching, and setting functions have been incorporated in the new integrated system of box 84 entitled "Integrated Avionics and Utility Systems Control".

It will also be noted that the electronic control LRUs 24 and the A/C discrete components 28 of Figure 1 have been eliminated and are incorporated in the new integrated systems control box 84. Here again, in some cases, where some of the non-backup control panels remain in the box 80, it may be necessary to continue to use some LRUs and some discrete components in which case the arrangement of Figure 1 may have to be continued to be used but the number of LRU's and components will be greatly reduced.

The integrated avionics 60 of Figure 1 is also incorporated in the new integrated systems control box 84 and many of the components thereof will find use in not only avionics control but in utility control also.

It is seen that the functions of the control panels 20, the LRUs 24, the discrete components 28 and the integrated avionics have been combined into one overall integrated system box 84. The functions produced by the manual controls from the control panels 20 are now produced by a system similar to the computer graphic or icon displays of various standard computer programs. More particularly, inside of the integrated systems control box 84 there is a cockpit display box 86 which is shown connected to a manual control box 88 by a connection shown as arrow 90. The manual control 88 will be at least dual for both pilot and co-pilot use and each may employ a cursor control device, a mouse or certain soft keys on the keyboard to select and enter commands. Display 86, of which there will usually be several, may each correspond to the monitor of a computer and show graphic displays and icons of the various functions that need to be controlled. For example, for controlling fluid flow, a plurality of valves and interconnections may appear on the screen of the display 86 and the pilot may then move a manual control of box 88, such as a mouse, so that a particular valve is highlighted. After pressing "enter" and selecting the desired valve, the various controls for the valve may be made to appear, such as "open" and "close" etc. Again the pilot would select the desired action and press "enter". Upon selecting the appropriate action, a signal from the cockpit display box 86 would be sent by way of a connection shown as double ended arrow 92 to a "Modular Avionics Unit" (MAU) 96 for processing. MAU 96 is a box in which a plurality of circuit boards with processing and input/output (I/O) interface capability for system control are inserted and many of them will have the function of processing signals from display 86. For example, a signal requesting a particular valve be opened would be processed by one or a combination of the circuit boards in MAU 96 to produce a signal on a line 100 which has the proper characteristics for use by the desired one of the utility controlled devices. Other utility type signals from MAU 96 to produce other desired actions which were accomplished in Figure 1 will also be presented as manual and automatic control signals on output lines shown as double ended arrows 100 and 101. Other circuit boards will process the avionics signals in a manner similar to the integrated avionics 60 of Figure 1 and they too will produce control signals on lines 100 and 101.

Lines 100 and 101are shown connected to a box 102 now called an "aircraft utility and avionics systems controlled devices" to show that it handles both the utility and avionics controls A connection 110 from the backup controls of control panel box 80 is also shown connected to the controlled devices box 102 to manually produce the desired control action when backup is needed.

With the present invention, it is a simple matter to provide MAU 96 with dual processing channels to provide for system redundancy for fail safe and fail operational performance. Furthermore, system suppliers may easily provide their own circuit boards for integration into the new system.

The A/C system sensors box 36 is the same as in Figure 1 but now produces it outputs on a dashed line 114 to the MAU box 96.

It is seen that by bringing the myriad of control panels, LRUs, discrete components and avionics into a unitary integrated system where the pilot controls the operations from a cockpit display and the signals are processed by individual circuits and processors on the circuit boards in the MAU 96 which further receives inputs form the A/C sensors in box 36, the overall system is greatly simplified, the number of components greatly reduced, the unnecessary redundant function mostly eliminated, and the size, weight and cost of the equipment for controlling the utilities of an aircraft is greatly reduced.

Many alterations and additions to the apparatus shown in Figure 2 will occur to those skilled in the art and I do not wish to be limited to the specific apparatus shown in describing the preferred embodiment.

## Claims

1. An integrated aircraft control system comprising:
a cockpit display (86)
and control device (88) for producing first signals (e.g. 90, 92) of desired utility and avionics controls under the command of the pilot,
wherein the aircraft avionics and utility system control device (88) and the avionics controls are used to produce a first control signal (e.g. 90, 92); and
a modular avionics unit (96) that receives the first control signal for controlling aircraft utility systems and aircraft avionics systems, wherein the modular avionics unit (96) includes a plurality of circuit boards for processing the first control signal and produces a second signal (e.g. 100, 101, 114) for operating the aircraft avionics and the aircraft utility systems;
wherein the aircraft avionics and utility system control device (84) and aircraft utility and avionics systems controlled devices are communicatively coupled with the modular avionics unit.

2. A system according to Claim 1 further including aircraft system sensors (36) connected to the modular avionics unit (96) to supply signals (114) thereto indicative of the sensed conditions.

3. A system according to Claim 2 further including means (96) connecting the aircraft system sensors (36) to the avionics systems (102).

4. A system according to Claim 1 further including a plurality of hand actuated devices (88) for producing backup control signals connected directly to the controlled devices (102).

5. A system according to Claim 1 wherein the cockpit display and aircraft utility system control device (86, 88) includes a monitor to display a plurality of possibly desired control functions and a manually operated selector (80) for the pilot to use to select a desired function and to actuate it for producing one of the first control signals (e.g. 90, 92).

## Patentansprüche

1. Integriertes Flugzeugsteuerungssystem, das folgendes umfaßt:
ein Cockpitdisplay (86) und eine Steuereinrichtung (88) zum Erzeugen erster Signale (z.B. 90, 92) von gewünschten Versorgungs- und Avioniksteuerungen unter dem Befehl des Piloten,
wobei die Flugzeugavionik- und -versorgungssystemsteuerungseinrichtung (88) und die Avioniksteuerung dazu verwendet werden, ein erstes Steuersignal (z.B. 90, 92) zu erzeugen; und
eine modulare Avionikeinheit (96), die das erste Steuersignal empfängt zum Steuern von Flugzeugversorgungssystemen und Flugzeugavioniksystemen, wobei die modulare Avionikeinheit (96) mehrere Leiterplatten zum Verarbeiten des ersten Steuersignals enthält und ein zweites Signal (z.B. 100, 101, 114) erzeugt zum Betreiben der Flugzeugavionik und der Flugzeugversorgungssysteme;
wobei die Flugzeugavionik- und -versorgungssystemsteuerungseinrichtung (88) und die über Flugzeugversorgungs- und Avioniksysteme gesteuerten Einrichtungen kommunikativ mit der modularen Avionikeinheit gekoppelt sind.

2. System nach Anspruch 1, weiterhin mit Flugzeugsystemsensoren (36), die mit der modularen Avionikeinheit (96) verbunden sind, um die erfaßte Bedingungen anzeigenden Signale (114) dorthin zu liefern.

3. System nach Anspruch 2, weiterhin mit Mitteln (96), die die Flugzeugsystemsensoren (36) mit den Avioniksystemen (102) verbinden.

4. System nach Anspruch 1, weiterhin mit mehreren handbetätigten Einrichtungen (88) zum Erzeugen von Backup-Steuersignalen, direkt mit den gesteuerten Einrichtungen (102) verbunden.

5. System nach Anspruch 1, wobei die Cockpitdisplay- und Flugzeugversorgungssystemsteuerungseinrichtung (86, 88) einen Monitor zum Anzeigen mehrerer möglicher gewünschter Steuerfunktionen und einen manuell betätigten Wähler (80) enthält, den der Pilot verwenden kann, um eine gewünschte Funktion zu wählen und sie zu aktivieren zum Erzeugen eines der ersten Steuersignale (z.B. 90, 92).

## Revendications

1. Système de commande intégré pour aéronef comprenant :
un afficheur pour cockpit (86) et un dispositif de commande (88) pour produire des premiers signaux (par exemple 90, 92) de servitude et de commandes d'avionique souhaités sous le contrôle du pilote,
dans lequel le dispositif de commande (88) de l'avionique et des circuits de servitude de l'aéronef et les commandes de l'avionique sont utilisés pour produire un premier signal de commande (par exemple 90, 92) et
une unité avionique modulaire (96) qui reçoit le premier signal de commande pour commander les circuits de servitude de l'aéronef et les systèmes avioniques de l'aéronef, dans lequel l'unité avionique modulaire (96) comprend une pluralité de circuits imprimés pour traiter le premier signal de commande et produit un deuxième signal (par exemple 100, 101, 114) pour faire fonctionner l'avionique de l'aéronef et les circuits de servitude de l'aéronef ;
dans lequel le dispositif de commande (88) de l'avionique et des circuits de servitude de l'aéronef ainsi que les dispositifs commandés par les servitudes de l'aéronef et le système avionique sont couplés de manière communicative avec l'unité avionique modulaire.

2. Système selon la revendication 1, comprenant en plus des capteurs pour système d'aéronef (36) raccordés à l'unité avionique modulaire (96) pour lui fournir des signaux (114) indiquant les conditions détectées.

3. Système selon la revendication 2, comprenant en plus des moyens (96) raccordant les capteurs pour système d'aéronef (36) au système avionique (102).

4. Système selon la revendication 1, comprenant en plus une pluralité de dispositifs actionnés à la main (88) pour produire des signaux de commande de secours raccordés directement aux dispositifs commandés (102).

5. Système selon la revendication 1, dans lequel l'afficheur pour cockpit et le dispositif de commande de circuit de servitude d'aéronef (86, 88) comprend un moniteur pour afficher une pluralité de fonctions de commande éventuellement souhaitées et un sélecteur à commande manuelle (80) que le pilote utilise pour sélectionner une fonction souhaitée et pour l'activer en vue de produire l'un des premiers signaux de commande (par exemple 90, 92).
